# EUROPÄISCHE PATENTSCHRIFT

(11) **EP 1 277 387 B1**
(45) Veröffentlichungstag und Bekanntmachung des Hinweises auf die Patenterteilung: **28.02.2007**
(21) Anmeldenummer: 02014749.2
(22) Anmeldetag: 04.07.2002
(51) Int. Cl.: A01D 41/12, A01F 12/40

(54) **Mähdrescher mit zugehörigem Häcksler und daran anschliessenden Wurfgebläsen**
Combine harvester with chopper and contiguous discharge fan
Moissonneuse-batteuse avec hacheuse et ventilateur de décharge adjacent

(30) Priorität: 17.07.2001 DE 10133965
(43) Veröffentlichungstag der Anmeldung: 22.01.2003
(73) Patentinhaber: CLAAS Selbstfahrende Erntemaschinen GmbH, 33428 Harsewinkel (DE)
(72) Erfinder: Niermann, Martin, 33428 Harsewinkel (DE); Brinkmann, Jörn, 33428 Harsewinkel (DE); Nollmann, Jürgen, 33775 Versmold (DE); Amsbeck, Dieter, 33428 Harsewinkel (DE)

(56) Entgegenhaltungen:
- EP-A- 0 631 717
- EP-A- 1 031 273
- DE-C- 3 546 679
- US-A- 5 797 793
- US-A- 5 976 011

## Beschreibung

Die Erfindung betrifft einen Mähdrescher mit im abgabeseitigen Bereich angeordneter Übergabe - oder Häckslereinrichtung, von wo aus das Stroh-/Spreu-Gemisch zwei in gleicher Ebene und nebeneinander angeordneten Wurfgebläsen radial zugeführt wird, denen im Bereich ihrer Guteintrittsöffnungen ein keilförmiges, mit der Spitze gegen die Gutförderrichtung gerichtetes Guttrennblech zwecks Aufteilung des Gutes in zwei Teilströme zugeordnet ist. Die beiden divergierenden Schenkel des Guttrennbleches bilden je den Beginn einer Teilummantelung eines Wurfgebläses, an denen sich zumindest je eine weitere einstellbare Teilummantelung in Umfangsrichtung anschließt, die eine in Rotationsachsrichtung verlaufende Abrisskante für die Gutführung bilden, wobei diese Abrisskante geradlinig oder gestuft verlaufen kann, sodass sich die Auslassöffnungen in Drehrichtung der Gebläserotoren dem Verlauf und der Form der Kanten entsprechend erweitern.

Ein derartiger Mähdrescher ist aus der DE 19908111 C1 bekannt. Dabei wird der vom Häcksler ausgeworfene aus einem Stroh-/Spreu-Gemisch bestehende Gutstrom ohne auf irgendeine Weise umgelenkt und dadurch abgebremst zu werden direkt einer nachgeschalteten Wurfgebläseeinrichtung radial zugeführt. Sie besteht aus mindestens zwei Wurfgebläsen, die mit vorgenannten Teilummantelungen ausgerüstet sind.(Im Folgenden stellenweise in der Einzahl beschrieben) Diese Teilummantelungen erfüllen ihren Zweck aufgrund ihrer festen Einstellung aber nur unter konstanten prognostizierten Erntebedingungen. Durch die radial verlaufende, keilförmige Abflachung der Ummantelung ist ein kontrollier- und steuerbarer Austrag der Gutmasse nur beschränkt möglich. Ferner ist durch die bauraumbedingte, zum Boden hin geneigte Anordnung der Wurfgebläse die Entfernung zwischen dem Gutaustrag und dem Boden stark unterschiedlich, sodass die auf dem Boden abgelegte Gutschicht in ihrer Dicke stark variiert.

Der vorliegenden Erfindung liegt daher die Aufgabe zugrunde, einen Mähdrescher, der eingangs näher bezeichneten Art so auszubilden, dass die verschwenkbaren Teilummantelungen des oder der Wurfgebläse den in die Wurfgebläse eintretenden Gutstrom nicht behindern und zudem eine gleichmäßige Ablage des von dem oder den Wurfgebläsen ausgetragenen Gutstromes auf dem Boden ermöglichen.

Diese Aufgabe wird gemäß den kennzeichnenden Merkmalen der Ansprüche 1 und 5 dadurch gelöst, dass jede der beiden weiteren Teilummantelungen zyklisch in den von den beiden divergierenden Schenkeln des Guttrennbleches begrenzten Raum eintauchen und aus diesem, zwecks Veränderung der Richtung des Gutstromes, herausschwenken, bzw. dass sich die Umfangsgeschwindigkeit der Teilummantelungen in Abhängigkeit von deren momentaner Stellung ändert. Auf diese Weise wird neben einer einwandfreien Verteilung des Gutes gewährleistet, dass die Teilummantelungen in ihrer Neutralstellung die Gutzufuhr zu den Wurfgebläsen von dem vorgeordneten Häcksler in keiner Weise behindern.

Zwecks Optimierung der Gutverteilung und aus bauraumtechnischen Gründen ist es zweckmäßig, dass die beiden einem Wurfgebläse zugeordneten Wandungsteile teleskopartig übereinander schwenkbar sind, und dass zwei zusammengehörige Wandungsteile ihre größtmögliche Überdeckung in den von den beiden divergierenden Schenkeln des Guttrennbleches gebildeten Raum einnehmen.

Weitere zweckmäßige Ausführungsformen der Erfindung ergeben sich aus den Unteransprüchen, wobei es nach einem wesentlichen Merkmal vorteilhaft ist, dass die Teilummantelungen bzw. die Wandungsteile aus ihrer eingefahrenen Neutralstellung heraus zunächst mit hoher und danach mit zunehmend langsamerer Geschwindigkeit herausgeschwenkt und aus ihrer voll ausgefahrenen Stellung zunächst mit langsamer und danach mit zunehmend höherer Geschwindigkeit wieder in ihre Neutralstellung zurückgeschwenkt werden.

Im Folgenden soll die Erfindung anhand beiliegender schematischer Zeichnungen näher erläutert werden. Dabei zeigt:

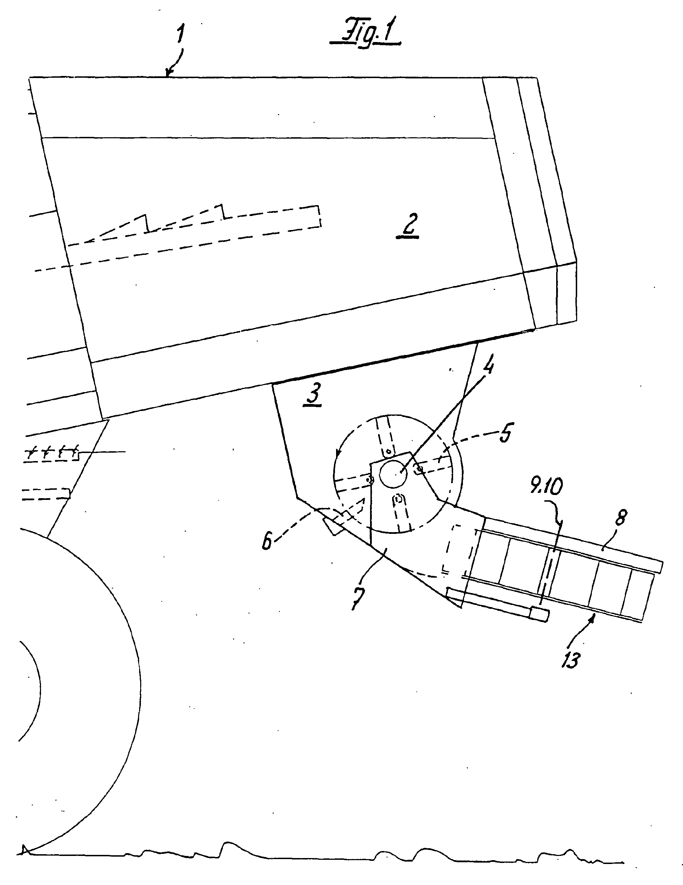

- Fig.1: den hinteren Teil eines Mähdreschers mit Anbauhäcksler und Wurfgebläsen in der Seitenansicht,
- Fig.2: den in Fig. 1 dargestellten Häcksler und die Wurfgebläse von unten,

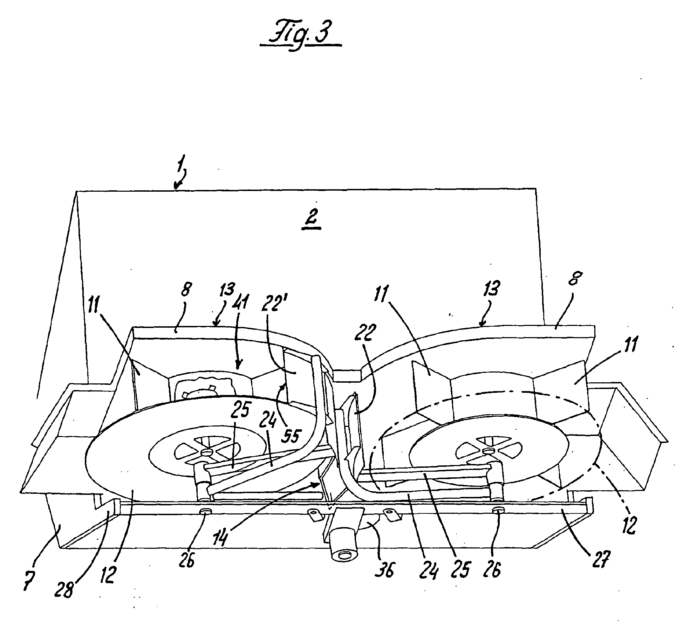

- Fig.3: die in Fig.2 dargestellten Wurfgebläse perspektivisch,
- Fig.4: einen Teil der in Fig.2 dargestellten Wurfgebläse in abgeänderter Ausführung,
- Fig.5: den Verstellmechanismus nach Fig.4 im Schnitt V-V,
- Fig.6: die Gutverteilung auf dem Ackerboden.

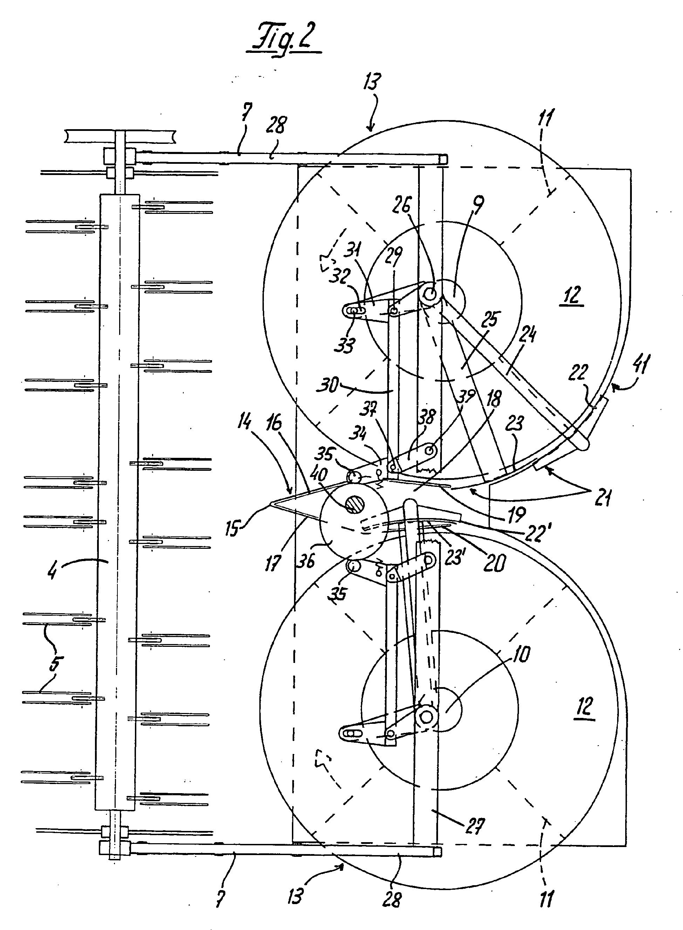

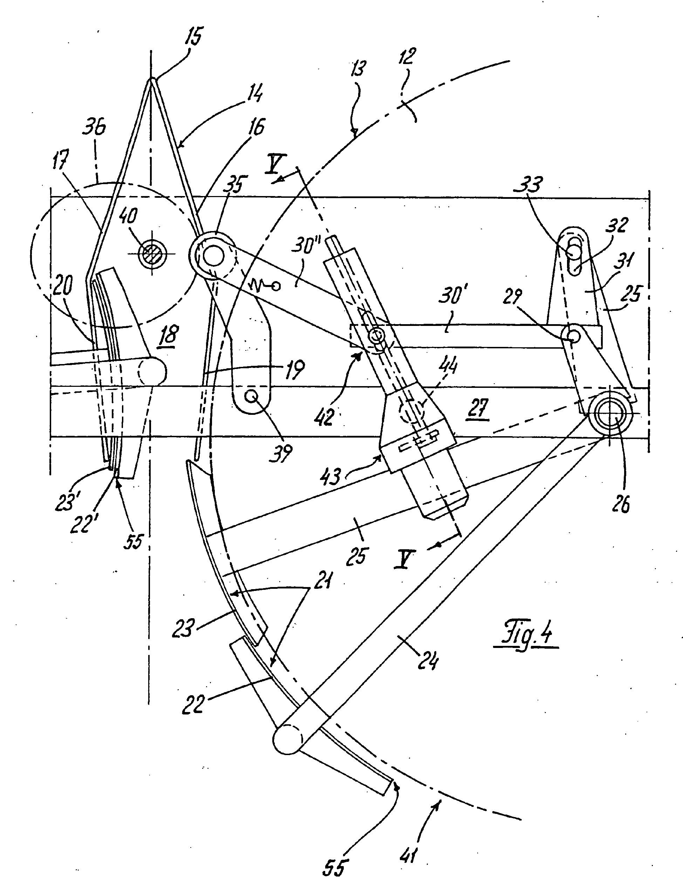

Mit 1 ist der hintere Teil eines Mähdreschers bezeichnet, mit der Strohausfallhaube 2, an die sich ein Häckslergehäuse 3 anschließt. In diesem Gehäuse 3 ist eine Welle 4 antreibbar gelagert, die mit schwenkbaren Häckselmessern 5 besetzt ist. Diese Häckselmesser 5 kämmen mit einer gehäusefesten Messerschar 6. Auf der Häckslerwelle 4 lagert das Rahmenteil 7 einer nachgeschalteten Wurfgebläseeinrichtung 13. Mit dem Rahmenteil 7 ist ein nach hinten auskragendes Abdeckteil 8 fest verbunden in dem die Rotationsachsen 9 und 10 antreibbar gelagert sind. Diese Rotationsachsen 9 und 10 sind mit flexiblen Wurfschaufeln 11 besetzt die nach unten von einer mitrotierenden Scheibe 12 abgedeckt sind. Den beiden aus dem oberen Abdeckteil 8, den rotierenden Achsen 9 und 10, den Wurfschaufeln 11 und den mitrotierenden Scheiben 12 gebildeten Wurfgebläsen 13 ist ein Guttrennblech 14 zugeordnet, dessen Spitze 15 gegen den von der Häckseleinrichtung 3-5 ausgestoßenen Gutstrom gerichtet ist. Die divergierenden Schenkel 16 und 17 des Guttrennbleches 14 schließen einen Raum 18 zwischen sich ein und dienen mit ihren auslaufenden Enden als Teilummantelungen 19 und 20 für die Wurfgebläse 13. Wie die obere Hälfte der Fig.2 zeigt, schließt sich an die Teilummantelung 19 eine weitere Teilummantelung 21 an, die aus zwei Wandungsteilen 22, 23 besteht. Beide Wandungsteile 22, 23 sind an den längeren Schenkeln von Winkelhebel 24 und 25 befestigt, die auf einem Zapfen 26 aufgesetzt sind. Letzterer ist mit einer Quertraverse 27 fest verbunden, die über seitliche Längsträger 28 an dem Rahmenteil 7 befestigt ist. Der kurze Schenkel des Winkelhebels 24 ist über einen Bolzen 29 mit einer Koppel 30 gelenkig verbunden. Im Bereich des Bolzens 29 ist mit der Koppel 30 eine Konsole 31 verschweißt, die an ihrem Ende ein Langloch 32 aufweist. In dieses Langloch 32 ragt ein Bolzen 33 hinein, der mit dem kürzeren Schenkel des Winkelhebels 25 fest verbunden ist. An dem dem Bolzen 29 abgewandten Ende der Koppel 30 ist mit dieser eine weitere Konsole 34 verschweißt, die endseitig eine Rolle 35 trägt. Diese Rolle 35 liegt ständig an einer antreibbaren exzentrisch gelagerten Scheibe 36 an. Im Bereich der Konsole 34 ist ein Bolzen 37 auf die Koppel 30 aufgesetzt auf dem ein Lenker 38 lagert. Das dem Bolzen 37 abgewandte Ende des Lenkers 38 umgreift einen weiteren Bolzen 39, der fest auf der Quertraverse 27 sitzt. Wie aus Fig.4 zu erkennen, weist die Rolle 35 in der dargestellten Lage den geringsten Abstand zur Drehachse 40 der exzentrisch gelagerten Scheibe 36 auf. Wird diese nun im Uhrzeigersinn gedreht, schwenken die beiden Wandungsteile 22, 23 um die Achse 26 zunächst mit geringer und dann mit zunehmender Geschwindigkeit in den Raum 18 hinein. Gleichzeitig schwenken die in der unteren Hälfte der Fig.2 dargestellten Wandungsteile 22', 23' zunächst mit hoher und dann mit abnehmender Geschwindigkeit aus dem Raum 18 heraus. Die kinematische Anordnung ist dabei so gewählt, dass sich während des Verschiebens der Koppel 30 die Wandungsteile 22, 23 mit unterschiedlicher Geschwindigkeit bewegen und zwar im Verhältnis 1:2 das bedeutet, dass das Wandungsteil 23 nur mit der Hälfte der Geschwindigkeit des Wandungsteiles 22 verschwenkt wird. Dies bewirkt zum einen, dass sie in ihrer völlig ausgefahrenen Stellung (obere Hälfte Fig.2) eine relativ große umfängliche Abdeckung für die Auslassöffnung 41 darstellen. Sie geben diese aber, wie die untere Hälfte der Fig.2 darstellt, völlig frei, da sie sich während ihrer Einfahrbewegung in den Raum 18 zunehmend mehr teleskopartig übereinander schieben bis sie ganz in den Raum 18 eingetaucht sind. Da das in der unteren Hälfte der Fig.2 dargestellte Wurfgebläse 13 ansonsten identisch ausgebildet ist wie das in der oberen Hälfte dargestellt, soll auf eine weitere Beschreibung verzichtet werden.

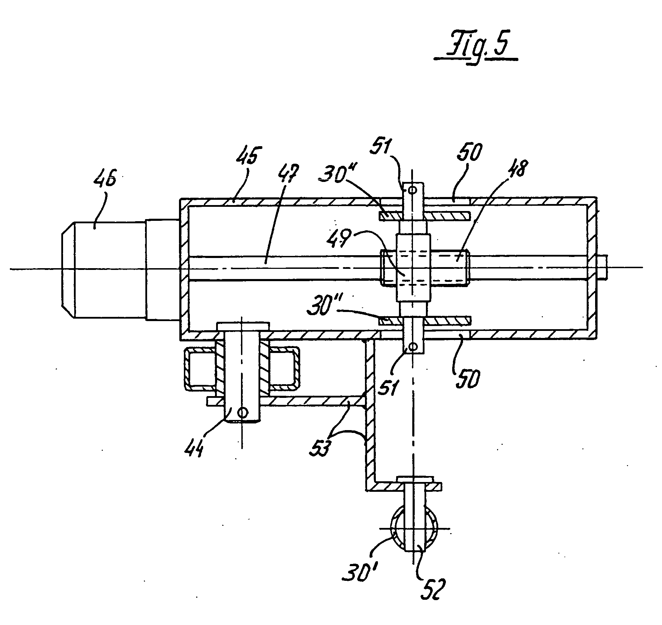

Die Fig.4 zeigt eine Möglichkeit wie die Grundstellung der beiden Wandungsteile 22, 23 verstellt werden kann. Da diese Verstellmöglichkeit in gleicher Weise für die Wandungsteile 22', 23' verwendet werden kann, soll sie an dieser Stelle nur einmal beschrieben werden. Im Gegensatz zur Ausbildung nach Fig.2 ist die Koppelstange 30 in diesem Ausführungsbeispiel zweigeteilt und besteht aus zwei Teilstücken 30' und 30". Diese beiden Teilstücke 30', 30" sind im Knickpunkt 42 gelenkig miteinander verbunden, wobei der Knickpunkt 42 mittels eines Spindeltriebes 43 verlagerbar ist, sodass der Schwenkwinkel der beweglichen Wandungsteile 22, 22', 23, 23' einstellbar ist. Der Spindeltrieb 43 als Ganzes ist schwenkbar auf einer Achse 44 aufgesetzt, die an der Quertraverse 27 befestigt ist. Einzelheiten lassen sich aus der Fig.5 erkennen. Diese Fig.5 zeigt, dass an der Achse 44 ein Gehäuse 45 angehängt ist, an das ein Getriebemotor 46 angeflanscht worden ist. Die vom Getriebemotor 46 angetriebene Spindel 47 ist in dem Gehäuse 45 gelagert und trägt einen Gewindeteil 48. Dem Gewindeteil 48 ist eine Spindelmutter 49 zugeordnet, die zwei durch Fenster 50 aus dem Gehäuse 45 hervorragende Zapfen 51 aufweist. Auf diese Zapfen 51 ist das gabelförmig sich aufweitende Koppelstangenteil 30" aufgesetzt. Das Koppelstangenteil 30' ist über einen Bolzen 52 gelenkig mit einem Halter 53 verbunden, der als Teil des Gehäuses 45 ausgebildet ist.

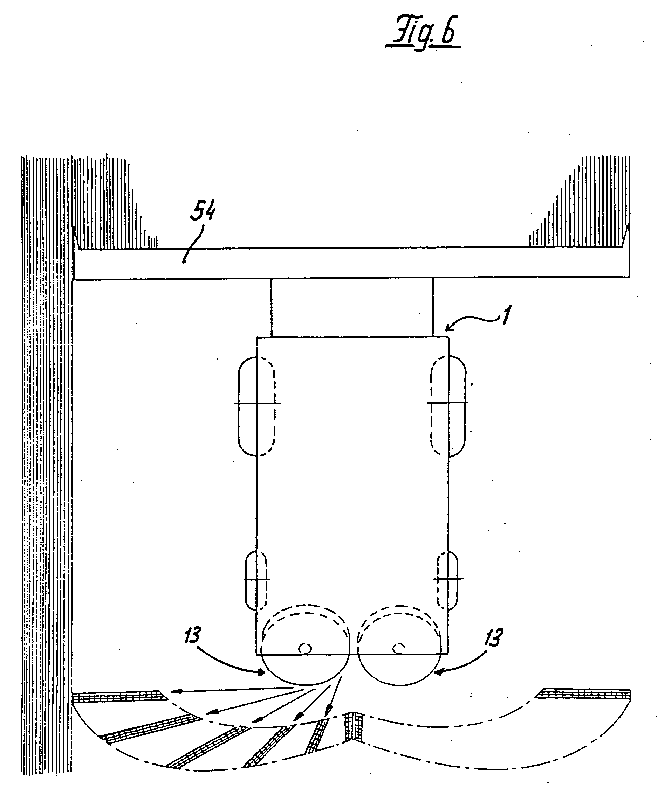

Aus der Fig.6 ist das gewünschte Streubild der beiden Wurfgebläse 13 zu erkennen, durch das eine gleichmäßige Verteilung des Gutes entsprechend der Breite des Schneidwerkes 54 erreicht wird. Aufgrund dessen, dass die Rotationsachse 10 der Wurfgebläse 13 eine zur Vertikalen geneigte Lage einnimmt, verkürzt oder verlängert sich in Abhängigkeit von der momentanen Position des den größeren Schwenkwinkel aulweisenden Wandungsteils 22, 22' der Weg des aus den Wurfgebläsen 13 austretenden Gutes zum Boden. Bei konstanter Umlaufgeschwindigkeit der Wandungsteile 22, 22', 23, 23'würde dies dazu führen, dass das aus den Wurfgebläsen 13 austretende Gut ungleichmäßig auf dem Boden verteilt wird. Um dennoch eine gleichmäßige Verteilung des Gutes auf dem Boden zu erreichen, verschwenken in einer weiteren erfindungsgemäßen Weise, zumindest die die bewegliche Abrisskante 55 (Figur 4) bildenden äußeren Wandungsteile 22, 22' um die jeweilige Rotationsachse 26 mit sich in Abhängigkeit von der momentanen Stellung der Abrisskante 55 ändernder Umfangsgeschwindigkeit. Diese lageabhängige Geschwindigkeitssteuerung wird wie bereits beschrieben mittels der exzentrisch gelagerten elliptischen Kurvenscheibe 36 realisiert. Aufgrund dessen, dass nur eine einzige Kuvenscheibe 36 für den Antrieb der schwenkbeweglichen Wandungsteile 22, 22', 23, 23' jedes Wurfgebläses 13 vorgesehen ist, erreichen die Wandungsteile 22, 22', 23, 23' abwechselnd die in Figur 2 dargestellten inneren und äußeren Todlagen, wobei die Umfangsgeschwindigkeit der schwenkbeweglichen Wandungsteile 22, 22', 23, 23' beim Verschwenken von der inneren zur äußeren Todlage abnimmt und sich umgekehrt beim Verschwenken von der äußeren zur inneren Todlage erhöht.

### Bezugszeichenliste

- 1: Teil eines Mähdreschers
- 2: Strohausfallhaube
- 3: Häckselgehäuse
- 4: Welle
- 5: Häckselmesser
- 6: Messerschar
- 7: Rahmenteil
- 8: Abdeckteil
- 9: Rotationsachsen
- 10: Rotationsachsen
- 11: Wurfschaufeln
- 12: Scheibe
- 13: Wurfgebläse
- 14: Guttrennblech
- 15: Spitze
- 16: Schenkel
- 17: Schenkel
- 18: Raum
- 19: Teilummantelung
- 20: Teilummantelung
- 21: Teilummantelung
- 22: Wandungsteil
- 23: Wandungsteil
- 24: Winkelhebel
- 25: Winkelhebel
- 26: Zapfen
- 27: Quertraverse
- 28: Längsträger
- 29: Bolzen
- 30: Koppel
- 31: Konsole
- 32: Langloch
- 33: Bolzen
- 34: Konsole
- 35: Rolle
- 36: Scheibe
- 37: Bolzen
- 38: Lenker
- 39: Bolzen
- 40: Drehachse
- 41: Auslassöffnung
- 42: Knickpunkt
- 43: Spindeltrieb
- 44 ,.: Achse
- 45: Gehäuse
- 46: Getriebemotor
- 47: Spindel
- 48: Gewindeteil
- 49: Spindelmutter
- 50: Fenster
- 51: Zapfen
- 52: Bolzen
- 53: Halter
- 54: Schneidwerk
- 55: Abrisskante

## Patentansprüche

1. Mähdrescher mit im abgabeseitigen Bereich angeordneter Übergabe-/oder Häckseleinrichtung, von wo aus das Stroh-/Spreu-Gemisch wenigstens zwei einander benachbart angeordneten Wurfgebläsen radial zugeführt wird, denen im Bereich ihrer Guteintrittsöffhungen ein mit der Spitze gegen die Gutförderrichtung gerichtetes Guttrennblech zwecks Aufteilung des Gutes in zumindest zwei Teilströme zugeordnet ist, wobei die beiden divergierenden Schenkel des Guttrennbleches je eine Teilummantelung eines Wurfgebläses bilden, an denen sich zumindest je eine weitere einstellbare Teilummantelung in Umfangsrichtung anschließt, die je eine in Rotationsachsrichtung verlaufende Abrisskante der Auslassöffnung der Wurfgebläse bilden,
**dadurch gekennzeichnet,**
**dass** jede der weiteren, einstellbaren Teilummantelungen (21) zyklisch in den von den beiden divergierenden Schenkeln (16 und 17) des Guttrennbleches (14) begrenzten Raum (18) eintauchen und aus diesem zwecks Veränderung der Richtung des Gutstromes herausschwenken.

2. Mähdrescher nach Anspruch 1,
**dadurch gekennzeichnet,**
**dass** die einem jeden Wurfgebläse (13) zugeordnete weitere Teilummantelung (21) aus zumindest zwei Wandungsteilen (22, 23) besteht.

3. Mähdrescher nach einem oder mehreren der vorhergehenden Ansprüche,
**dadurch gekennzeichnet,**
**dass** die wenigstens zwei einem Wurfgebläse (13) zugeordneten Wandungsteile (22 und 23) teleskopartig übereinander schwenkbar sind.

4. Mähdrescher nach einem oder mehreren der vorhergehenden Ansprüche,
**dadurch gekennzeichnet,**
**dass** die wenigstens zwei zusammengehörigen Wandungsteile (22, 23) ihre größtmögliche Überdeckung in dem von den beiden divergierenden Schenkeln (16 und 17) des Guttrennbleches (14) gebildeten Raum (18) einnehmen.

5. Mähdrescher mit im abgabeseitigen Bereich angeordneter Übergabe- oder Häckseleinrichtung, von wo aus das Stroh-Spreu-Gemisch wenigstens einem Wurfgebläse zugeführt wird, wobei das wenigstens eine Wurfgebläse eine zur Vertikalen geneigte Lage einnimmt und wenigstens eine einstellbare Teilummantelung in Umfangsrichtung aufweist, die eine in Rotationsrichtung verlaufende Abrisskante der Auslassöffnung des wenigstens einen Wurfgebläses bildet,
**dadurch gekennzeichnet,**
**dass** sich die Umfangsgeschwindigkeit der wenigstens einen einstellbaren Teilummantelung (22, 22', 23, 23') in Abhängigkeit von der momentanen Stellung der wenigstens einen einstellbaren Teilummantelung (22, 22', 23, 23') ändert.

6. Mähdrescher nach einem oder mehreren der vorhergehenden Ansprüche,
**dadurch gekennzeichnet,**
**dass** die lageabhängige Geschwindigkeitssteuerung der wenigstens einen einstellbaren Teilummantelung (22, 22', 23, 23') durch eine exzentrisch gelagerte Kurvenscheibe 36 realisiert wird.

7. Mähdrescher nach einem oder mehreren der Ansprüche 5 und 6,
**dadurch gekennzeichnet,**
**dass** die Kurvenscheibe (36) eine elliptische Gestalt aufweist.

8. Mähdrescher nach einem oder mehreren der vorhergehenden Ansprüche,
**dadurch gekennzeichnet,**
**dass** die wenigstens zwei Wandungsteile (22, 22', 23, 23') eines Wurfgebläses (13) um eine zur Rotationsachse (9) des Wurfgebläses (13) parallele Achse (26) verschwenkbar sind.

9. Mähdrescher nach Anspruch 8,
**dadurch gekennzeichnet,**
**dass** die parallele Achse (26) der wenigstens zwei Wandungsteile (22, 22', 23, 23') der Wurfgebläse (13) auf einer quer zur Fahrtrichtung des Mähdreschers verlaufenden Traverse (27) angeordnet sind.

10. Mähdrescher nach einem oder mehreren der vorhergehenden Ansprüche,
**dadurch gekennzeichnet,**
**dass** die wenigstens zwei Wandungsteile (22, 22', 23, 23') eines Wurfgebläses (13) an je einem Winkelhebel (24, 25) befestigt sind, wobei die Winkelhebel (24, 25) eine gemeinsame Rotationsachse (26) aufweisen.

11. Mähdrescher nach einem oder mehreren der vorhergehenden Ansprüche,
**dadurch gekennzeichnet,**
**dass** die beiden kürzeren Schenkel der Winkelhebel (24 und 25) mit einem Ende einer Koppelstange (30) gelenkig verbunden sind.

12. Mähdrescher nach Anspruch 11,
**dadurch gekennzeichnet,**
**dass** das der Lagerstelle für die kürzeren Schenkel der Winkelhebel (24, 25) entgegengesetzte Ende der Koppelstange (30) eine Rolle (35) trägt, wobei die Rolle (35) permanent an Stirnfläche der Kurvenscheibe (36) anliegt.

13. Mähdrescher nach einem oder mehreren der vorhergehenden Ansprüche,
**dadurch gekennzeichnet,**
**dass** die Koppelstange (30) im Bereich der von ihr getragenen Rolle (35) mittels eines Lenkers (38) an einer Quertraverse (27) angelenkt ist.

14. Mähdrescher nach einem oder mehreren der vorhergehenden Ansprüche,
**dadurch gekennzeichnet,**
**dass** die einem jedem Wurfgebläse (13) zugeordnete Koppelstange (30) zweigeteilt ist (30', 30"), wobei die Winkellage der beiden Koppelstangenhälften (30', 30") durch Verlagerung ihres Knickpunktes (42) veränderbar ist.

15. Mähdrescher nach einem oder mehreren der vorhergehenden Ansprüche,
**dadurch gekennzeichnet,**
**dass** die Verlagerung des Knickpunktes (42) mittels eines Spindeltriebes (46) erfolgt.

16. Mähdrescher nach einem oder mehreren der Ansprüchen 14 und 15,
**dadurch gekennzeichnet,**
**dass** der Spindeltrieb (43) und die beiden Koppelstangenhälften (30', 30") von einem Gehäuse (45) getragen werden, das um eine von der Quertraverse (27) getragene Achse (44) verschwenkbar ist.

17. Mähdrescher nach einem oder mehreren der vorhergehenden Ansprüche,
**dadurch gekennzeichnet,**
**dass** die wenigstens zwei Wandungsteile (22, 22', 23, 23') eines Wurfgebläses (13) mittels zumindest einer Kolbenzylindereinheit verschwenkbar sind.

18. Mähdrescher nach einem oder mehreren der vorhergehenden Ansprüche,
**dadurch gekennzeichnet,**
**dass** die Abrisskante (55) der wenigstens einen einstellbaren Teilummantelung (21) aus ihrer eingefahrenen Neutralstellung heraus zunächst mit hoher und danach mit zunehmend langsamerer Geschwindigkeit herausgeschwenkt und aus ihrer .voflausgefährenen Stellung zunächst mit langsamer und danach mit zunehmend höherer Geschwindigkeit wieder in ihre Neutralstellung zurückgeschwenkt werden.

19. Mähdrescher nach einem oder mehreren der vorhergehenden Ansprüche,
**dadurch gekennzeichnet,**
**dass** die wenigstens zwei zusammengehörigen Wandungsteile (22, 23 und 22', 23') mit unterschiedlicher Geschwindigkeit schwenkbar sind, vorzugsweise im Verhältnis 1:2.

## Claims

1. A combine harvester with a transfer or chopping device arranged in the region at the discharge side, from where the straw-chaff mixture is fed radially to at least two mutually adjacently arranged throwing blowers with which there is associated in the region of their material intake openings a material separation plate directed with the tip in opposite relationship to the direction of conveying movement of the material for the purposes of dividing the material into at least two partial flows, wherein the two diverging limbs of the material separation plate each form a respective partial casing of a throwing blower, each of which is at least respectively adjoined by a further adjustable partial casing in the peripheral direction which respectively form a break-away edge, extending in the direction of the axis of rotation, of the outlet opening of the throwing blowers,
**characterised in that**
each of the further adjustable partial casings (21) engage cyclically into the space (18) delimited by the two diverging limbs (16 and 17) of the material separation plate (14) and pivot out of said space for the purposes of altering the direction of the flow of material.

2. A combine harvester according to claim 1 **characterised in that** the further partial casing (21) associated with each throwing blower (13) comprises at least two wall portions (22, 23).

3. A combine harvester according to one or more of the preceding claims **characterised in that** the at least two wall portions (22 and 23) associated with a throwing blower (13) are telescopically pivotable over each other.

4. A combine harvester according to one or more of the preceding claims **characterised in that** the at least two associated wall portions (22, 23) assume their maximum overlap in the space (18) formed by the two diverging limbs (16 and 17) of the material separation plate (14).

5. A combine harvester with a transfer or chopping device arranged in the region at the discharge side, from where the straw-chaff mixture is fed to at least one throwing blower, wherein the at least one throwing blower assumes a position inclined relative to the vertical and has at least one adjustable partial casing in the peripheral direction which forms a break-away edge, extending in the direction of rotation, of the outlet opening of the at least one throwing blower,
**characterised in that**
the peripheral speed of the at least one adjustable partial casing (22, 22', 23, 23') changes in dependence on the instantaneous position of the at least one adjustable partial casing (22, 22', 23, 23').

6. A combine harvester according to one or more of the preceding claims **characterised in that** the position-dependent speed control of the at least one adjustable partial casing (22, 22', 23, 23') is implemented by an eccentrically mounted cam disc (36).

7. A combine harvester according to one or more of claims 5 and 6 **characterised in that** the cam disc (36) is of an elliptical configuration.

8. A combine harvester according to one or more of the preceding claims **characterised in that** the at least two wall portions (22, 22', 23, 23') of a throwing blower are pivotable about an axis (26) parallel to the axis of rotation (9) of the throwing blower (13).

9. A combine harvester according to claim 8 **characterised in that** the parallel axis (26) of the at least two wall portions (22, 22', 23, 23') of the throwing blowers (13) are arranged on a transverse member (27) extending transversely with respect to the direction of travel of the combine harvester.

10. A combine harvester according to one or more of the preceding claims **characterised in that** the at least two wall portions (22, 22', 23, 23') of a throwing blower (13) are each fixed to a respective angle lever (24, 25), wherein the angle levers (24, 25) have a common axis of rotation (26).

11. A combine harvester according to one or more of the preceding claims **characterised in that** the two shorter limbs of the angle levers (24, 25) are pivotably connected to an end of a coupling rod (30).

12. A combine harvester according to claim 11 **characterised in that** the end of the coupling rod (30), which is opposite to the mounting location for the shorter limbs of the angle levers (24, 25), carries a roller (35), the roller (35) bearing permanently against a face of the cam disc (36).

13. A combine harvester according to one or more of the preceding claims **characterised in that** in the region of the roller (35) carried thereby the coupling rod (30) is pivotably connected to a transverse member (27) by means of a link (38).

14. A combine harvester according to one or more of the preceding claims **characterised in that** the coupling rod (30) associated with each throwing blower (13) is divided into two (30', 30"), wherein the angular position of the two coupling rod halves (30', 30") is variable by displacement of the pivot point (42) thereof.

15. A combine harvester according to one or more of the preceding claims **characterised in that** the displacement of the pivot point (42) is effected by means of a spindle drive (43).

16. A combine harvester according to one or more of claims 14 and 15 **characterised in that** the spindle drive (43) and the two coupling rod halves (30', 30") are carried by a housing (45) pivotable about an axis (44) carried by the transverse member (27).

17. A combine harvester according to one or more of the preceding claims **characterised in that** the at least two wall portions (22, 22', 23, 23') of a throwing blower (13) are pivotable by means of at least one piston-cylinder unit.

18. A combine harvester according to one or more of the preceding claims **characterised in that** the break-away edge (55) of the at least one adjustable partial casing (21) is pivoted out of its retracted neutral position firstly at a high speed and thereafter at an increasingly slower speed and is pivoted from its fully extended position back into its neutral position again firstly at a slow speed and thereafter at an increasingly higher speed.

19. A combine harvester according to one or more of the preceding claims **characterised in that** the at least two associated wall portions (22, 23 and 22', 23') are pivotable at a differing speed, preferably in a ratio of 1:2.

## Revendications

1. Moissonneuse-batteuse munie d'un dispositif de transfert ou de broyage qui est monté dans la zone de sortie et à partir duquel le mélange de paille et de balle est amené radialement à au moins deux soufflantes d'éjection juxtaposées associées, dans la zone de leurs entrées de produit, à une tôle de division de produit dont la pointe est tournée à l'opposé de la direction de transport du produit et qui est destinée à diviser le produit en au moins deux flux partiels, les deux branches divergentes de la tôle de division du produit formant chacune une enveloppe partielle d'une soufflante d'éjection, dont chacune se prolonge, dans la direction circonférentielle, par au moins une autre enveloppe partielle réglable formant une arête de décollement qui est orientée dans la direction de l'axe de rotation et qui appartient à l'ouverture d'éjection des soufflantes d'éjection, **caractérisée en ce que**, dans le but de modifier la direction du flux de produit, chacune des autres enveloppes partielles réglables (21) plonge dans l'espace (18) délimité par les deux branches divergentes (16 et 17) de la tôle de division du produit (14) et en ressort cycliquement.

2. Moissonneuse-batteuse selon la revendication 1, **caractérisée en ce que** l'autre enveloppe partielle (21) associée à chacune des soufflantes d'éjection (13) se compose de parties de paroi au nombre d'au moins deux (22, -23).

3. Moissonneuse-batteuse selon une ou plusieurs des revendications précédentes, **caractérisée en ce que** les parties de paroi au nombre d'au moins deux (22 et 23) associées à une soufflante d'éjection (13) peuvent pivoter l'une au-dessus de l'autre dans un mouvement télescopique.

4. Moissonneuse-batteuse selon une ou plusieurs des revendications précédentes, **caractérisée en ce que** les parties de paroi associées au nombre d'au moins deux (22, 23) atteignent leur position de superposition maximale dans l'espace (18) délimité par les deux branches divergentes (16 et 17) de la tôle de division du produit (14).

5. Moissonneuse-batteuse munie d'un dispositif de transfert ou de broyage qui est monté dans la zone de sortie et à partir duquel le mélange de paille et de balle est amené à une soufflante d'éjection au nombre d'au moins une, ladite soufflante d'éjection au nombre d'au moins une occupant une position inclinée par rapport à la verticale et possédant dans la direction circonférentielle au moins une enveloppe partielle réglable formant une arête de décollement qui est orientée dans la direction de l'axe de rotation et qui appartient à l'ouverture d'éjection de ladite une soufflante d'éjection au nombre d'au moins une, **caractérisée en ce que** la vitesse périphérique de ladite enveloppe partielle réglable au nombre d'au moins une (22, 22', 23, 23') varie en fonction de la position instantanée de ladite enveloppe partielle réglable au nombre d'au moins une (22, 22', 23, 23').

6. Moissonneuse-batteuse selon une ou plusieurs des revendications précédentes, **caractérisée en ce que** la régulation de la vitesse en fonction de la position de ladite au moins une enveloppe partielle réglable (22, 22', 23, 23') est réalisée à l'aide d'une came (36) montée de manière excentrique.

7. Moissonneuse-batteuse selon une ou plusieurs des revendications 5 et 6, **caractérisée en ce que** la came (36) a une forme elliptique.

8. Moissonneuse-batteuse selon une ou plusieurs des revendications précédentes, **caractérisée en ce que** les parties de paroi au nombre d'au moins deux (22, 22', 23, 23') d'une soufflante d'éjection (13) peuvent pivoter autour d'un axe (26) qui est parallèle à l'axe de rotation (9) de la soufflante d'éjection (13).

9. Moissonneuse-batteuse selon la revendication 8, **caractérisée en ce que** l'axe parallèle (26) des parties de paroi au nombre d'au moins deux (22, 22', 23, 23') de la soufflante d'éjection (13) est monté sur une traverse (27) disposée perpendiculairement à la direction de déplacement de la moissonneuse-batteuse.

10. Moissonneuse-batteuse selon une ou plusieurs des revendications précédentes, **caractérisée en ce que** les parties de paroi au nombre d'au moins deux (22, 22', 23, 23') d'une soufflante d'éjection (13) sont fixées chacune à un levier coudé (24, 25), les leviers coudés (24, 25) possédant un axe de rotation (26) commun.

11. Moissonneuse-batteuse selon une ou plusieurs des revendications précédentes, **caractérisée en ce que** les deux branches courtes des leviers coudés (24 et 25) sont reliées de manière articulée à l'extrémité d'une biellette (30).

12. Moissonneuse-batteuse selon la revendication 11, **caractérisée en ce que** l'extrémité de la biellette (30) opposée au point d'appui des branches courtes des leviers coudés (24, 25) porte un galet (35), le galet (35) reposant en permanence sur la face frontale de la came (36).

13. Moissonneuse-batteuse selon une ou plusieurs des revendications précédentes, **caractérisée en ce que** la biellette (30) est articulée sur une traverse perpendiculaire (27) par un bras oscillant (38) au niveau du galet (35) qu'elle porte.

14. Moissonneuse-batteuse selon une ou plusieurs des revendications précédentes, **caractérisée en ce que** la biellette (30) associée à chacune des soufflantes d'éjection (13) est divisée en deux (30', 30"), la position angulaire des deux demi-biellettes (30', 30") pouvant être modifiée en déplaçant leur point d'inflexion (42).

15. Moissonneuse-batteuse selon une ou plusieurs des revendications précédentes, **caractérisée en ce que** le déplacement du point d'inflexion (42) est commandé par un mécanisme à vis (46).

16. Moissonneuse-batteuse selon une ou plusieurs des revendications 14 et 15, **caractérisée en ce que** le mécanisme à vis (43) et les deux demi-biellettes (30', 30") sont portés par un boîtier (45) qui peut pivoter autour d'un axe (44) porté par la traverse perpendiculaire (27).

17. Moissonneuse-batteuse selon une ou plusieurs des revendications précédentes, **caractérisée en ce que** les parties de paroi au nombre d'au moins deux (22, 22', 23, 23') d'une soufflante d'éjection (13) peuvent être pivotées à l'aide d'au moins un ensemble piston-cylindre.

18. Moissonneuse-batteuse selon une ou plusieurs des revendications précédentes, **caractérisée en ce que** l'arête de décollement (55) de ladite enveloppe partielle réglable au nombre d'au moins une (21) quitte sa position neutre rétractée d'abord à une vitesse élevée, puis de plus en plus lente et est ramenée de sa position d'extension maximale à sa position neutre d'abord à une vitesse lente, puis de plus en plus rapide.

19. Moissonneuse-batteuse selon une ou plusieurs des revendications précédentes, **caractérisée en ce que** les parties de paroi au nombre d'au moins deux (22, 23 et 22', 23') peuvent pivoter à des vitesses différentes, de préférence dans un rapport 1:2.
